# EUROPEAN PATENT SPECIFICATION

(11) **EP 0 859 658 B1**
(45) Date of publication and mention of the grant of the patent: **03.07.2002**
(21) Application number: 95917129.9
(22) Date of filing: 24.04.1995
(51) Int. Cl.: B01D 46/02, B01D 46/06, B01D 46/08, B01D 39/08, B01D 39/10, B01D 46/04, F26B 25/00

(54) **COMPACT FLEXIBLE FILTER ASSEMBLY FOR A FLUID BED GRANULATOR, COATER OR DRYER**
FLEXIBLE KOMPAKTFILTERANORDNUNG FÜR WIRBELBETTGRANULATOREN, BESCHICHTUNGSVORRICHTUNGEN ODER TROCKNER
ENSEMBLE FILTRE SOUPLE ET COMPACT POUR UNE ENROBEUSE, UN SECHOIR OU UN GRANULATEUR A LIT FLUIDISE

(43) Date of publication of application: 26.08.1998
(73) Proprietor: Gubler, Scott, A., St. George, UT 84770 (US)
(72) Inventor: Gubler, Scott, A., St. George, UT 84770 (US)
(74) Representative: Hepp, Dieter
(86) International application number: US9504998
(87) International publication number: WO9633793

(56) References cited:
- DE-A- 2 015 303
- GB-A- 1 231 374
- GB-A- 2 116 872
- US-A- 3 383 774
- US-A- 4 247 313
- US-A- 4 336 035
- US-A- 4 645 520
- US-A- 4 738 696
- US-A- 5 171 339
- US-A- 5 199 965
- US-A- 5 320 657

## Description

### BACKGROUND OF THE INVENTION

### The Field of the Invention

This invention relates in general to fluid bed granulators, coaters and dryers, in particular, to a filter assembly consisting of a rigid filter frame around which a flexible filter media is employed in such a way that it allows the flexible filter media to be used in a much more versatile, simplified and condensed configuration. The invention can also be cleaned of blinding process material during operation by a system in which air pressure is applied alternately to the filters in reverse direction so as to remove the blinding particles from them without periodically stopping the process.

### Background/Description of Prior Art

Prior art fluid bed granulators, coaters and dryers have used bag filters, for their filter systems, that are very elaborate in construction, occupy a lot of space in the equipment, are very difficult to change and expensive to replace. The degree of difficulty in changing the filter in a fluid bed system is critical in that the filters have to be changed often to keep the necessary sanitary condition and/or product integrity.

Because of the above described difficulties with the prior art bag filter assemblies, parties have tried to use rigid cartridge filter assemblies such as are used in dust collection bag house, etc. The prior art rigid cartridge filters usefulness is greatly limited in that they are made of stiff filter media which is not as versatile as the flexible filter media and can't be used with most of the products and procedures in fluid bed processes. One of the major reasons for this limiting factor is that the stiff filter media is too much of a moisture barrier which causes the filters to blind much faster.

Another type of filter assembly that has been employed is the construction of a rigid frame with a flexible media stretched tightly over it. This type of assembly has disadvantages, such as, numerous long filter units are required to get the needed filter area, which cause them to be too bulky, difficult to install, difficult to clean and change.

The document US-4,247,313, which is considered as representing the nearest prior art, shows a filter assembly with a plurality of conduits that are coaxially positioned with an annular clearance at their ends. The filter assembly has an internally generated scavenging gas flow and a pulse jet system for cleaning scavenging gas filter elements. A rigid, perfectly metal frame is secured to the conduits. Extending over said frame, a bag filter is secured to inlet ends of the conduits. The dust-laden scavenging gas flows through the bag filter and through the frame to an outlet of the filter assembly.

### Advantages of the Present Invention

Accordingly, besides the advantages described above, several advantages of the present invention are:
(a) to provide a filter assembly using flexible filter media that is much more compact, without reducing filter media surface area, which has not been available with any prior art.
(b) to provide a filter assembly in which the frame that supports the filter is reusable, and where the filter media construction is simpler and less expensive to construct than the prior art.
(c) to provide a filter assembly that greatly increases the ease of changing and cleaning. The prior art bag systems can take several hours to change wherein the assembly of the present invention can be changed in minutes.

A further advantage of the present invention is that it provides an assembly comprising of a rigid frame work around which flexible filter media is fitted which is mounted in the exhaust system of a fluid bed granulator, coater or dryer. Said filter elements are mounted so that when negative process air is exerted against them during operation said flexible filter media forms around and through the rigid filter framework to give a meander-like cross-section and provide sufficient filter area in a minable space. Some of the advantages over the prior art bag filters are that this new filter assembly is much easier to change. Prior art bag systems are elaborate in their design, which make them difficult to change and clean.

Some of the advantages of this new filter assembly over the prior art rigid cartridge filters are that this assembly allows the use of flexible filter media, which is more versatile, less expensive, and asier to clean. The prior art cartridge assemblies are very difficult to clean when changing from one product to another. The assembly herein being patented requires that the flexible filter media be removed from the frame and washed in a washing machine to clean it before reusing. Prior art cartridge assemblies are made of rigid filter media which does not function properly with many products and procedures, mainly because they blind prematurely.

An advantage of the rigid frame and flexible filter media assembly, herein being patented, is that when a pulse of reverse air flow is applied against the flexible filter media it causes said media to flex in the opposite direction discharging the blinding particles off the outer fabric. This can be done without stopping the process.

Other advantages are readily apparent from the following description of certain preferred embodiments thereof taken in conjunction with the accompanying drawings although variations and modifications may be affected without departing from the sphere and the scope of the normal concepts of the disclosed invention. You will find further advantages of the invention from a consideration of the ensuing descriptions and accompanying drawings.

### Drawing Figures:

Fig. 1 Shows the filter assembly located in the inside area of the fluid bed granulator, coater or dryer.

Fig. 2 Shows the filter configuration with a combination of filter assemblies taken along the line 2--2 Fig. 1.

Fig. 3 Shows a side view of the filter configuration attached to the mounting plate with a gasket mounted between the filter assembly and mounting plate taken along the line 3--3 Fig. 2.

Fig. 4 Shows a top sectional view of the filter assembly with the filter bag being pulled, by process air, to the inside area around the side rods, giving it a meander-like cross-section in the process stage of the fluid bed granulator, coater or dryer taken along the line 4--4 Fig. 3.

Fig. 5 Shows a top sectional view of the filter assembly with the filter bag being pushed out from the side rods by a pulse of reverse air in the cleaning stage of the fluid bed granulator, coater or dryer, taken along the line 5--5 Fig. 3.

Fig. 6 Shows a side sectional view of the filter assembly with the filter frame configuration with a top and bottom connected by side rods which allows the filter bag to fit around the outside of the filter frame as well as over the bottom with a clamp at the top to hold the filter bag in place taken along the line 6--6 Fig. 3.

Fig. 7 Shows a perspective view of a filter assembly in accordance with the invention.

### Drawing Reference Numerals

- 1: Fluid Bed Granulator, Coater or Dryer
- 2: Top Support Plate
- 3: Filter Top Plate
- 4: Filter Bottom Plate
- 5: Side Rod
- 6: Threaded Rod
- 7: Filter Clamp
- 8: Filter Assembly
- 9: Filter Bag
- 10: Filter Frame
- 11: Gasket
- 12: Mounting Plate
- 13: Pleat in Bag

### Description of the Invention

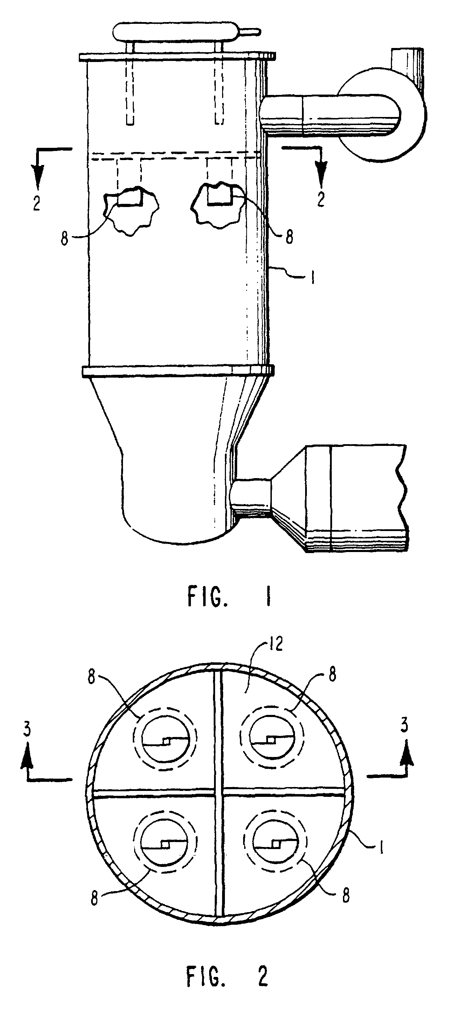

Fig. 1 shows the filter assembly 8 located in the fluid bed granulator, coater, or dryer.

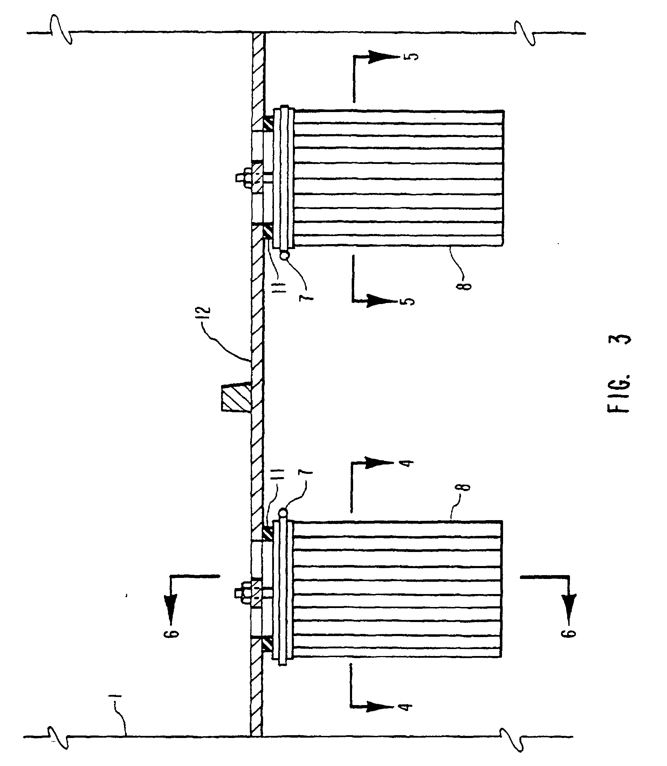

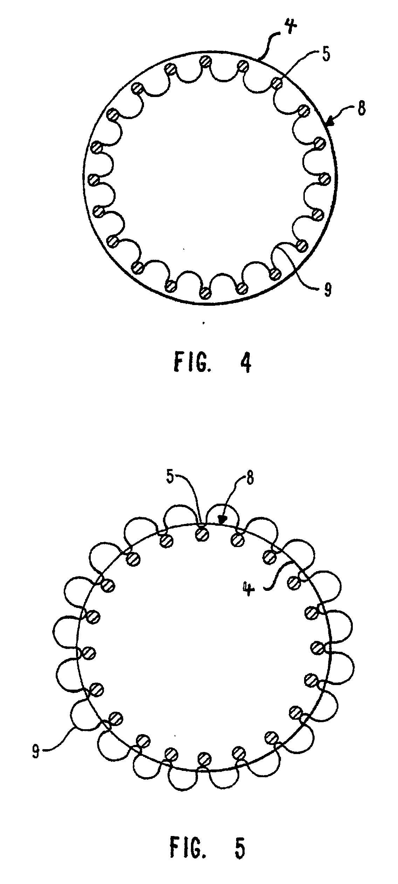

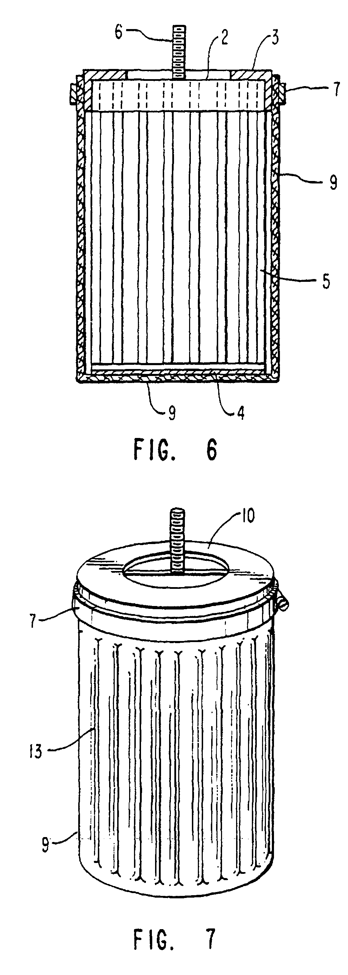

The filter assembly 8, Fig. 2, Fig. 3, Fig. 4 and Fig. 5, comprises of a filter frame 10, Fig. 7, a filter bag 9, Fig. 4, Fig. 5, Fig. 6, and Fig. 7, a clamp 7, Fig. 3, Fig. 6 and Fig. 7 and a gasket 11, Fig. 3. The filter frame 10, Fig. 7, is a fabricated assembly which comprises of a top support plate 2, Fig. 6 which holds the threaded rod 6, Fig. 6 allowing the filter frame 10, Fig. 7 to be bolted to the mounting plate 12, Fig. 3, a filter top plate 3, Fig. 6 giving the top of the filter a means of support for the top support plate 2, Fig. 6 and filter frame side rod 5, Fig. 4, Fig. 5 and Fig. 6, the top support plate has an opening to allow air to flow through the filter, a filter bottom plate 4, Fig. 6, which allows support for the filter frame rods 5, Fig. 4, Fig. 5 and Fig. 6. The filter frame side rods 5, Fig. 4, Fig. 5 and Fig. 6 are arranged on the perimeter of the top plate 3, Fig. 6 and on the perimeter of the bottom plate 4, Fig. 6, allowing the side rods 5 to form the shape of the side wall of said filter frame assembly 10, Fig. 7. The filter bottom plate 4, Fig. 6 acting as a solid bottom. The filter bag 9, Fig. 4, Fig. 5, Fig. 6 and Fig. 7, having an open top allowing the filter bag 9 during installation, to be pulled upward over the filter frame 10 until the bottom media of the filter bag 9 is tight against the filter bottom plate 4. Clamp 7, Fig. 3, Fig. 6 and Fig. 7, holds the filter bag 9 in place at the top of the filter assembly 8, Fig. 3, Fig. 6 and Fig. 7. Clamp 7, Fig. 3. Fig. 6 and Fig. 7, has a mechanical means of being tightened around the perimeter of the filter assembly 8 and filter bag 9 causing the filter bag 9 to be held in a fixed position at the top of the filter assembly 8, Fig. 3, Fig. 6 and Fig. 7. The filter bag 9 has numerous pleats 13. Fig. 7, to allow the filter bag 9 to expand in the cleaning process and contract on the normal operation as shown in Fig 4 and Fig. 5. The filter frame 10 is made of a ridged material such as different plastics, metals, hard rubber and wood, the filter frame will vary in size and shape to fit the required filtering applications.

### Operation of Invention

The filter assembly 8, Fig. 3, herein being patented is located in a fluid bed granulator, coater or dryer 1 in such a way to not allow process material to escape from the process bowl as process fluidation air is passing through it. As the process airflow moves through the filter assembly 8 it causes the filter bag 9 flexible media to draw towards the center of the filter assembly 8, as shown in Fig. 4, causing the filter bag 9 flexible media to collapse allowing the filter bag 9 flexible media to be of sufficient area permitting the necessary process air to pass through at a necessary flow rate causing the proper filtering of the process air. The filter assembly 8 has the ability to clean itself of the filter blinding process material by applying a pulse of reverse air to the outlet side of each filter bag 9 alternating manner which allows the filter bag 9 to flex in the outward direction from the center of the assembly frame 10, which is triggered by an automatic periodic timing device, causing the filter bag 9 to expand quickly. When the filter bag 9 flexes outward as shown in Fig. 5, it allows the filter blinding process material to keep moving in the outward direction away from the filter bag 9 flexible media. This action permits the filter bag 9 to clean itself of sufficient blinding process material without stopping the process. After the pulse of reverse air, the filter media is drawn toward the center of the filter assembly 8 by the process air, once again allowing the filter assembly 8 to filter the necessary process air. When the airflow is turned off the filter assembly 8 can be removed quickly from the fluid bed granulator, coater or dryer 1 by loosening the nut on the threaded rod 6. Now the filter bag 9 can be removed from the filter frame 10 by loosening the clamp 7 permitting the filter bag 9 to be cleaned in a washing machine. When the filter bag 9 flexible media is dry it can be easily mounted again on the filter frame 10 by tightening the clamp 7 over the outside perimeter of the filter bag 9 and filter frame 10 securing the filter bag 9 to the filter frame 10, Fig. 7. The filter assembly 8 can now be placed in the fluid bed granulator, coater or dryer, Fig. 1. The filter assembly 8 is then ready to filter the process airflow of the fluid bed granulator, coater or dryer 1.

### Conclusion and Scope of Invention

Accordingly, the reader will see that the compact flexible filter assembly for a fluid bed granulator, coater or dryer of this invention has the ability to filter sufficient amounts of the processed material from the airflow which moves through the filter assembly. The filter assembly has the ability to clean itself of the filter processed material, when a pulse of reverse airflow is applied to the filter bag, causing the filter bag to flex outward from the center of the filter assembly. This action can be completed during operation without stopping the process. Once the filter bag has cleaned itself the process air resumes to flow from the outside to the inside of the filter assembly again filtering sufficient amounts of the process material from the airflow. Furthermore, the filter assembly has the additional advantages in that:
- it provides the same filtering capacity as bulky prior art filters by allowing the flexible filter media to flex around the side rods of the rigid filter frame, causing an extended filtering surface;
- it permits the process of cleaning with a pulse of reverse air at any time during the operation of the fluid bed granulator, coater, or dryer;
- it permits quick filter assembly removal from the fluid bed granulator, coater or dryer;
- it allows the filter bag to be removed from the rigid filter frame for cleaning in a washing machine;
- it allows the filter bag flexible media to be reusable after washing;
- it provides compactness allowing the filter assembly to be a smaller configuration.

Although the description above contains many specificities, these should not be construed as limiting the scope of the invention but merely providing illustrations of some of the presently preferred embodiments of this invention. For example, the filter assembly rigid frame and filter bag can have other shapes such as square, oval trapezoidal, triangular, etc.; the top plate, top support plate, side rods, bottom plate, threaded rod can have other shapes and other material.

## Claims

1. A filter assembly for filtering process air generated by a fluid bed granulator, coater or dryer, including:
a rigid frame (10) having a housing framework with numerous openings, said rigid frame (10) including a top plate (3) having an outlet opening, a bottom plate (4), and a plurality of rods (5) extending between the top plate (3) and the bottom plate (4); and
a flexible filter media (9) positioned around said rigid frame (10) so that during the process operation, process air flowing through the filter assembly pressures said flexible filter media (9) around said rigid frame (10) and at least partially through openings between the plurality of rods (5) into an interior portion of the rigid frame (10), giving said flexible filter media a pleated (13) configuration; said flexible filter media (9) requiring all process air to pass through said flexible filter media (9) before it passes through said rigid frame (10) and the outlet opening; said flexible filter media (9) allowing the necessary process air to pass through the filter at a flow rate so as to filter sufficient amounts of the process material out of the process air;
said rigid frame (10) having an opening on the outlet side of said filter assembly so as to allow the use of a cleaning mechanism, said cleaning mechanism adapted to apply a pulse of air to the interior portion of said rigid frame (10) to cause said filter media (9) to flex outward away from the interior portion of said rigid frame (10);
**characterized by** a clamping mechanism (7) which secures a portion of the filter media (9) to said rigid frame (10) when clamped, and which, when unclamped, allows said filter media (9), which is flexible and reusable, to be separated from said rigid frame (10) for cleaning or replacement; and
by a fastening means (6) for releasably attaching said rigid frame (10) to a support structure (12) in said fluid bed granulator, coater, or dryer so that said rigid frame (10) is quickly detachable from said support structure (12) in order to minimize the time necessary to exchange one filter assembly for another.

2. The filter assembly according to claim 1 wherein said rigid frame (10) is made so that the process material does not corrode said rigid frame.

3. The filter assembly according to claim 1 wherein said fastening means (6) comprises a threaded rod (6) to attach said rigid frame (10) to said support structure (12).

4. The filter assembly according to claim 1 wherein a sealing media (11) is located between said rigid frame (10) and said support structure (12) to prevent process material from bypass of said filter assembly as it exhausts out of the fluid bed granulator, coater, or dryer.

5. The filter assembly according to claim 1 wherein said clamping mechanism (7) secures said filter media (9) so as to envelope said rigid frame (10).

6. The filter assembly according to claim 1 wherein said filter media (9) comprises a flexible filter bag.

7. A method of cleaning a filter assembly according to claim 1, **characterized in that** the flexible filter media (9) is caused to momentarily flex outward, away from the interior portion of the rigid frame (10), by applying a pulse of air to the interior portion of the rigid frame (10).

## Patentansprüche

1. Filteranordnung zum Filtrieren von Prozessluft, die durch einen Wirbelschicht-Sprühgranulator, einer Wirbelschicht-Beschichtungsmaschine oder einem Wirbelschicht-Trockner erzeugt wird, mit:
einem starren Rahmen (10), der ein Gehäuse-Rahmentragwerk mit zahlreichen Öffnungen besitzt, wobei der starre Rahmen (10) eine obere Platte (3) mit einer Auslassöffnung, eine Bodenplatte (4) und eine Vielzahl von Stäben (5) aufweist, die sich zwischen der oberen Platte (3) und der Bodenplatte (4) erstrecken;
ein flexibles Filtermedium (9), das um den festen Rahmen (10) so angeordnet ist, dass Prozessluft, die während des Prozessbetriebes durch die Filteranordnung strömt, das flexible Filtermedium (9) um den starren Rahmen (10) herum und zumindest teilweise durch Öffnungen zwischen der Vielzahl von Stäben (5) in einen inneren Bereich des starren Rahmens (10) drückt, wobei dem flexiblen Filtermaterial ein gefalteter Aufbau verliehen wird; wobei das flexible Filtermedium (9) die gesamte Prozessluft durch das flexible Filtermedium (9) hindurchströmen lässt, bevor diese durch den starren Rahmen (10) und die Auslassöffnung hindurchtritt; wobei das flexible Filtermedium (9) die notwendige Prozessluft durch den Filter in einer Strömungsgeschwindigkeit hindurchtreten lässt, so dass es ausreichende Mengen des Prozessmaterials aus der Prozessluft herausfiltert;
wobei der starre Rahmen (10) eine Öffnung an der Auslassseite der Filteranordnung für die Verwendung eines Reinigungsmechanismus aufweist, wobei durch den Reinigungsmechanismus ein Luftimpuls auf den inneren Anteil des starren Rahmens (10) zum Wegbiegen des Filtermediums (9) nach aussen, vom Innenabschnitt des starren Rahmens (10) weg, ausübbar ist,
**gekennzeichnet durch** einen Klemm-Mechanismus (7), der einen Teil des Filtermediums (9) am starren Rahmen (10) befestigt, wenn er festgeklemmt ist, und der, wenn er nicht festgeklemmt ist, ein Trennen des Filtermediums (9), das flexibel und wieder verwendbar ist, von dem starren Rahmen (10) zum Reinigen oder Ersetzen ermöglicht; und
**durch** eine Befestigungseinrichtung (6) zum lösbaren Befestigen des starren Rahmens (10) an einen Halteaufbau (12) in dem Wirbelschicht-Sprühgranulator, in der Wirbelschicht-Beschichtungsmaschine oder dem Wirbelschicht-Trockner, zum schnellen Abnehmen des starren Rahmens (10) von dem Halteaufbau (12) für das Minimieren der zum Austausch einer Filteranordnung **durch** eine andere notwendige Zeit.

2. Filteranordnung nach Anspruch 1, bei der der starre Rahmen (10) so hergestellt ist, dass das Prozessmaterial den starren Rahmen nicht korrodiert.

3. Filteranordnung nach Anspruch 1, bei der das Befestigungsmittel (6) einen mit einem Gewinde versehenen Stab (6) zum Befestigen des starren Rahmens (10) an den Trägeraufbau (12) aufweist.

4. Filteranordnung nach Anspruch 1, bei der ein Dichtmedium (11) zwischen dem starren Rahmen (10) und dem Halteaufbau (12) zur Vermeidung des Umgehens der Filteranordnung durch das Prozessmaterial beim Herausströmen aus dem Wirbelschicht-Sprühgranulator, der Wirbelschicht-Beschichtungsmaschine oder dem Wirbelschicht-Trockner angeordnet ist.

5. Filteranordnung nach Anspruch 1, bei der der Klemm-Mechanismus (7) das Filtermedium (9) so befestigt ist, dass der starre Rahmen (10) umhüllt wird.

6. Filteranordnung nach Anspruch 1, bei der das Filtermedium (9) einen flexiblen Filterbeutel aufweist.

7. Verfahren zum Reinigen einer Filteranordnung nach Anspruch 1, **dadurch gekennzeichnet, dass** das flexible Filtermedium (9) durch Aufbringen eines Luftimpulses auf den inneren Anteil des starren Rahmens (10) momentan nach aussen, weg vom inneren Anteil des starren Rahmens (10), gebogen wird.

## Revendications

1. Ensemble formant filtre destiné à filtrer de l'air de traitement généré par un appareil de granulation, de revêtement ou de séchage à lit fluidisé, comprenant :
un bâti rigide (10) comportant une armature formant logement pourvue de nombreuses ouvertures, ledit bâti rigide (10) comprenant une plaque supérieure (3) pourvue d'un orifice de sortie, une plaque inférieure (4), et de multiples tiges (5) qui s'étendent entre la plaque supérieure (3) et la plaque inférieure (4); et
un agent filtrant souple (9) placé autour dudit bâti rigide (10) afin qu'au cours de l'opération de traitement l'air de traitement circulant à travers l'ensemble formant filtre presse ledit agent filtrant souple (9) autour dudit bâti rigide (10) et au moins partiellement à travers des ouvertures formées entre les multiples tiges (5) en le faisant rentrer dans une partie intérieure du bâti rigide (10), pour conférer audit agent filtrant souple une configuration plissée (13); ledit agent filtrant souple (9) nécessitant que tout l'air de traitement le traverse avant de passer à travers ledit bâti rigide (10) et l'orifice de sortie; ledit agent filtrant souple (9) permettant à l'air de traitement nécessaire de traverser le filtre à un débit propre à éliminer par filtrage de l'air de traitement des quantités suffisantes de la matière de traitement;
ledit bâti rigide (10) comportant une ouverture située du côté de la sortie dudit ensemble formant filtre afin de permettre l'utilisation d'un mécanisme de nettoyage, ledit mécanisme de nettoyage étant adapté pour appliquer une pulsation d'air à la partie intérieure dudit bâti rigide (10) afin de contraindre ledit agent filtrant (9) à s'incurver vers l'extérieur à distance de la partie intérieure dudit bâti rigide (10);
**caractérisé par** un mécanisme de serrage (7) qui, lorsqu'il est serré, assujettit une partie de l'agent filtrant (9) audit bâti rigide (10) et qui, lorsqu'il est desserré, permet de séparer dudit bâti rigide (10) ledit agent filtrant (9) qui est souple et réutilisable en vue de le nettoyer ou de le remplacer; et
par un moyen de fixation (6) destiné à fixer de manière amovible ledit bâti rigide (10) à une structure de support (12) prévue dans ledit appareil de granulation, de revêtement ou de séchage à lit fluidisé afin que ledit bâti rigide (10) puisse être désolidarisé rapidement de ladite structure de support (12) pour réduire au minimum le temps nécessaire au remplacement d'un ensemble formant filtre par un autre.

2. Ensemble formant filtre selon la revendication 1, dans lequel ledit bâti rigide (10) est conçu pour ne pas être corrodé par la matière de traitement.

3. Ensemble formant filtre selon la revendication 1, dans lequel ledit moyen de fixation (6) comprend une tige filetée (6) destinée à fixer ledit bâti rigide (10) à ladite structure de support (12).

4. Ensemble formant filtre selon la revendication 1, dans lequel un moyen d'étanchéité (11) est situé entre ledit bâti rigide (10) et ladite structure de support (12) pour empêcher de la matière de traitement de contourner ledit ensemble formant filtre lorsqu'elle est expulsée de l'appareil de granulation, de revêtement ou de séchage à lit fluidisé.

5. Ensemble formant filtre selon la revendication 1, dans lequel ledit mécanisme de serrage (7) assujettit ledit agent filtrant (9) de façon qu'il enveloppe ledit bâti rigide (10).

6. Ensemble formant filtre selon la revendication 1, dans lequel ledit agent filtrant (9) comprend un sac filtrant souple.

7. Procédé de nettoyage d'un ensemble formant filtre selon la revendication 1, **caractérisé en ce que** l'agent filtrant souple (9) est contraint à s'incurver momentanément vers l'extérieur, à distance de la partie intérieure du bâti rigide (10), par l'application d'une pulsation d'air à la partie intérieure du bâti rigide (10).
